**Europäisches Patentamt**

**European Patent Office**

**Office européen des brevets**

(11) Veröffentlichungsnummer: **0 298 205**
**B1**

# EUROPÄISCHE PATENTSCHRIFT

(45) Veröffentlichungstag der Patentschrift:
**25.04.90**

(51) Int. Cl.⁴: **B62D 35/00**

(21) Anmeldenummer: **88105792.1**

(22) Anmeldetag: **12.04.88**

(54) Antriebseinrichtung für eine Luftleitvorrichtung.

(30) Priorität: **04.07.87 DE 3722202**

(43) Veröffentlichungstag der Anmeldung:
**11.01.89 Patentblatt 89/2**

(45) Bekanntmachung des Hinweises auf die Patenterteilung:
**25.04.90 Patentblatt 90/17**

(84) Benannte Vertragsstaaten:
**DE FR GB IT SE**

(56) Entgegenhaltungen:
**EP-A- 0 226 778**
**DE-A- 3 615 584**

(73) Patentinhaber: **Dr.Ing.h.c. F. Porsche Aktiengesellschaft, Porschestrasse 42, D-7000 Stuttgart 40(DE)**

(72) Erfinder: **Brin, Constantin, Dipl.-Ing., Heilbronner Strasse 314, D-7000 Stuttgart 30(DE)**
Erfinder: **Durm, Jürgen, Dipl.-Ing. FH., Wolf-Hirth-Strasse 4, D-7257 Ditzingen(DE)**

## Beschreibung

Die Erfindung bezieht sich auf eine Antriebseinrichtung zum Bewegen einer an einem Kraftfahrzeug vorgesehenen Luftleitvorrichtung von einer eingefahrenen Ruhestellung in eine ausgefahrene Betriebsstellung und umgekehrt, wobei die Antriebseinrichtung ein um eine Achse drehbar gelagertes Zahnsegment aufweist, das mit einem Stellhebel der Luftleitvorrichtung in Wirkverbindung steht.

Eine Antriebseinrichtung der eingangs genannten Gattung ist in der nicht veröffentlichten deutschen Patentanmeldung DE-A 36 15 584 beschrieben. Bei dieser Antriebseinrichtung ist das Zahnsegment einstückig mit dem Stellhebel ausgebildet, wodurch sowohl beim Einfahren als auch beim Ausfahren der Luftleitvorrichtung ein starrer Durchtrieb vom Getrieberitzel über das Zahnsegment zum Stellhebel der Luftleitvorrichtung erfolgt. Dieser Anordnung haftet der Nachteil an, daß sich der Nachlauf des Elektromotors der Antriebseinrichtung mit der Temperatur (Sommer/Winter) stark ändert und außerdem von Fahrzeug zu Fahrzeug unterschiedlich ist. Dadurch wird das Antriebssystem mehr oder weniger verspannt, wenn die Luftleitvorrichtung auf die aufbauseitigen Anschläge aufläuft, was unter Umständen zum Bruch der flexiblen Wellen der Antriebseinrichtung führen kann.

Um auftretende Toleranzen zwischen der Luftleitvorrichtung und dem angrenzenden Aufbau ausgleichen zu können, müssen die Anschläge bei dieser Anordnung einstellbar ausgebildet sein, was den Montageaufwand wesentlich erhöht. Ferner wird der Motor abrupt angehalten, sollten die elektrischen Endschalter für den Motor durch Montagefehler dejustiert sein.

Aufgabe der Erfindung ist es, an einer Antriebsvorrichtung für eine verstellbare Luftleitvorrichtung solche Vorkehrungen zu treffen, daß montage- oder fertigungsbedingte Fehlerquellen wie Nachlauf des Elektromotors oder dejustierte Endschalter kompensiert werden können.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß in der Endphase der Schließbewegung der Luftleitvorrichtung durch die entkoppelte Anordnung von Zahnsegment und Stellhebel sowie durch das Federelement die montage- oder fertigungsbedingt auftretenden Fehlerquellen (Motornachlauf, falsch justierte Endschalter usw.) an der Stelle der Entkopplung ausgeglichen werden können.

Bei der Schließbewegung der Luftleitvorrichtung entkoppelt das Zahnsegment über die Schlitzöffnung von einer oberen Begrenzungskante in Richtung einer unteren Begrenzungskante, sobald die Luftleitvorrichtung auf die aufbauseitigen Anschläge aufläuft, der Motor aber noch nicht abgeschaltet wurde (dejustierte Endschalter) oder länger nachläuft. Es erfolgt somit kein abruptes Anhalten des Motors mehr und durch den größeren Weg, den das System nun machen kann, sind die Verspannkräfte der flexiblen Wellen wesentlich geringer. Die Verspannung wird vom Federelement aufgenommen. Beim Ausfahren der Luftleitvorrichtung hat das Antriebssystem das ganze Drehmoment des Motors zur Verfügung, um beispielsweise eine eingefrorene Luftleitvorrichtung in ihre ausgefahrene Betriebsstellung zu bewegen. Dies wird dadurch erreicht, daß der Mitnehmer des Zahnsegmentes unmittelbar an der oberen Begrenzung der Schlitzöffnung anliegt. Durch den Winkel β der Schlitzöffnung im Stellhebel bzw. durch die Federauslegung kann die definierte Elastizität in der Kraftübertragung beim Schließvorgang variiert werden. Ein Klappern der Luftleitvorrichtung in der Ruhestellung wird dadurch verhindert, daß die Luftleitvorrichtung unter Vorspannung an den aufbauseitigen Anschlägen aufliegt.

Ein Ausführungsbeispiel der Erfindung ist in der Zeichnung dargestellt und wird im folgenden näher erläutert.
Es zeigt

Fig. 1 eine Schrägansicht von hinten auf den Heckbereich eines Personenwagens mit einer verstellbaren Luftleitvorrichtung,

Fig. 2 eine Teildraufsicht auf die Antriebseinrichtung der Luftleitvorrichtung,

Fig. 3 einen Schnitt nach der Linie III-III der Fig. 2, gedreht,

Fig. 4 eine Seitenansicht des Federelementes der Antriebseinrichtung in verschiedenen Funktionsstellungen,

Fig. 5 eine schematische Ansicht der Antriebseinrichtung für die Luftleitvorrichtung.

Der Personenwagen 1 umfaßt einen Aufbau 2 mit einer im Heckbereich 3 angeordneten Luftleitvorrichtung 4, die mittels einer Verstelleinrichtung 5 von einer etwa bündig mit dem angrenzenden Aufbau 2 verlaufenden Ruhestellung A in eine ausgefahrende Betriebsstellung B bewegbar ist undumgekehrt. Durch die Luftleitvorrichtung 4 wird einerseits der Luftwiderstandsbeiwert des Personenwagens 1 herabgesetzt und andererseits im Fahrbetrieb der dynamische Hinterraddruck vergrößert (Abtrieb).

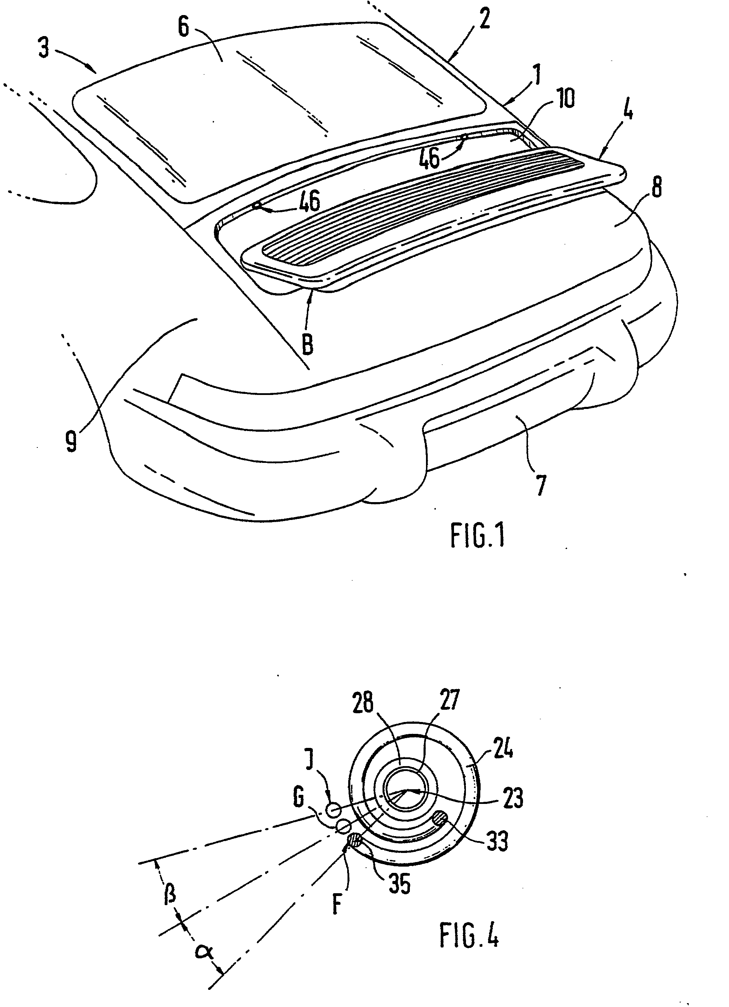

Im Heckbereich 3 setzt sich der Aufbau 2 aus einer Heckscheibe 6, einem Stoßfänger 7 und einem schwenkbaren Heckdeckel 8 zusammen, der zwischen Seitenteilen 9 angeordnet ist. Der Heckdeckel 8 weist unterhalb der Heckscheibe 6 eine etwa rechteckförmige Öffnung 10 auf, in die die Luftleitvorrichtung 4 eingesetzt ist (Fig. 1). In der Ruhestellung A verläuft die klappen- bzw. spoilerartig ausgebildete Luftleitvorrichtung 4 etwa außenhautbündig mit der Kontur des fließheckartig ausgestalteten Heckbereichs 3, wogegen sie in der Betriebsstellung B aus der Karosserieebene herausgeschwenkt ist, dergestalt, daß ihre außenliegende Anströmfläche etwa horizontal angestellt ist. Gleichzeitig wird die Luftleitvorrichtung 4 entgegen der Fahrtrichtung C um ein Maß D nach hinten verschoben.

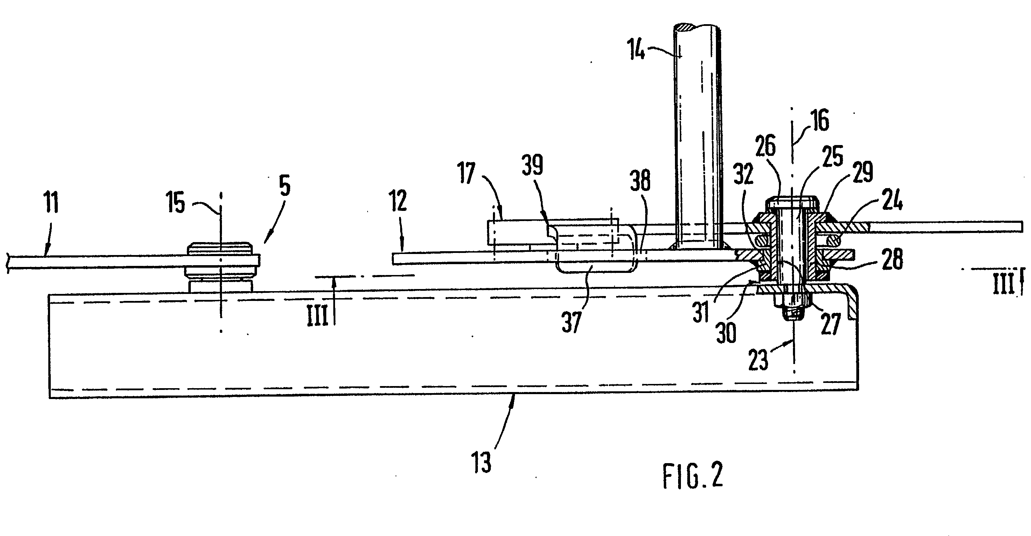

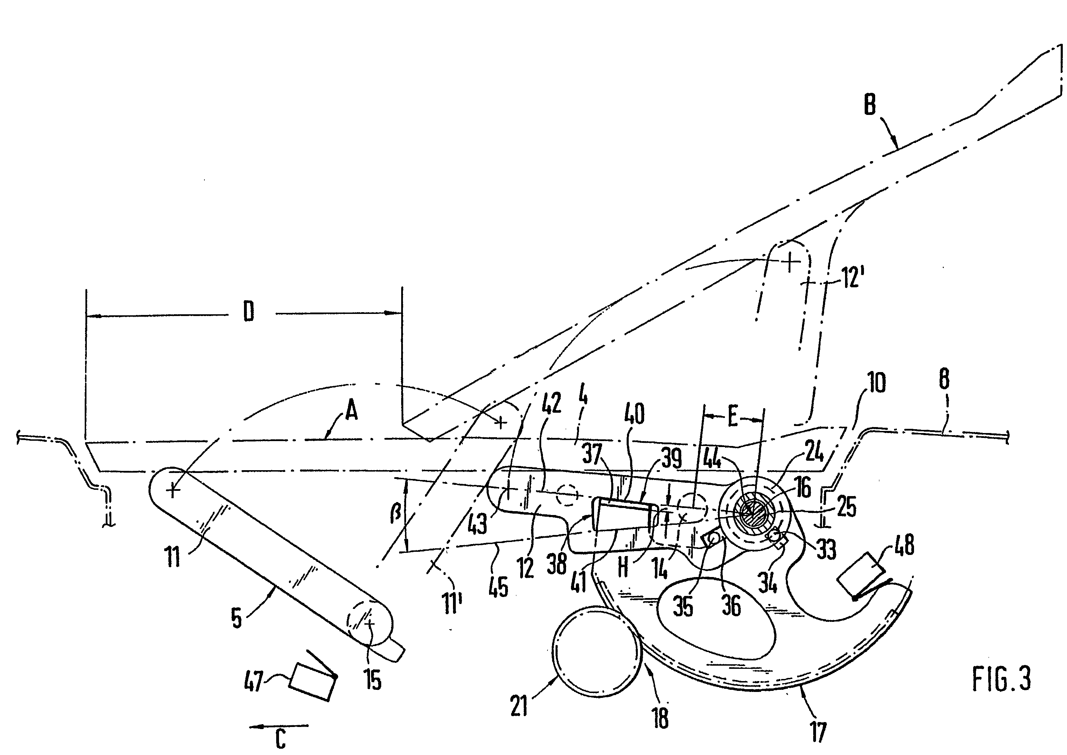

Die Verstellvorrichtung 5 umfaßt gemäß den Fig. 2 und 3 auf jeder Längsseite der Luftleitvorrichtung 4 zwei Stellhebel 11, 12, die einerseits mit der Luftleitvorrichtung 4 und andererseits mit einer deckelseitig befestigten Schiene 13 drehbar verbunden sind und eine Viergelenkanordnung bilden. Die Drehpunkte 15, 16 der Stellhebel 11, 12 sind dabei feststehend ausgebildet. In ausgefahrener Betriebsstellung B der Luftleitvorrichtung sind die beiden Stellhebel 11, 12 durch die Bezugszeichen 11', 12' gekennzeichnet.

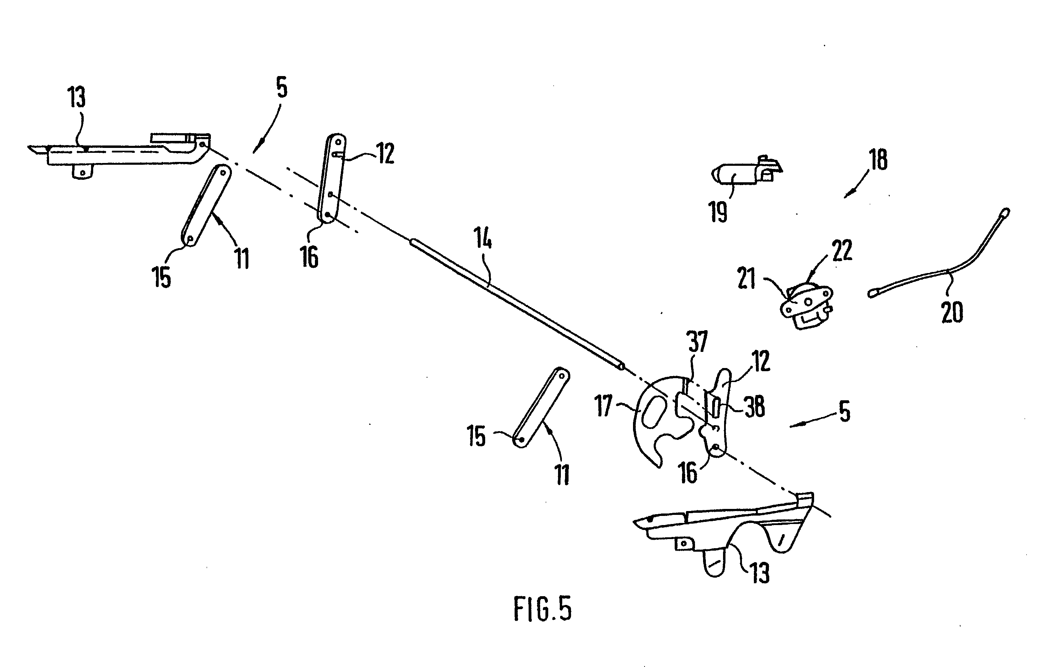

Die in Fahrtrichtung C gesehen hintenliegenden Stellhebel 12 sind mittels eines Querrohres 14 fest miteinander verbunden. Das Querrohr 14 verläuft entsprechend Fig. 3 mit Abstand E zum Drehpunkt 16 des Stellhebels 12. Einer der beiden hintenliegenden Stellhebel 12 wirkt mit einem Zahnsegment 17 einer Antriebseinrichtung 18 zusammen. Die Antriebseinrichtung 18 umfaßt gemäß Fig. 5 einen Elektromotor 19, der über eine biegsame Welle 20 mit einem Antriebsritzel 21 eines Getriebes 22 verbunden ist, wobei das unterhalb des Zahnsegmentes 17 angeordnete Antriebsritzel 21 mit dem Zahnsegment 17 kämmt. Das Zahnsegment 17 und der Stellhebel 12 sind getrennt voneinander auf einer sich in Fahrzeugquerrichtung erstreckenden Achse 23 drehbar gelagert und über ein Federelement 24 in einer bestimmten Lage relativ zueinander gehalten. Die beiden in Längsrichtung gesehen, miteinander fluchtenden Stellhebel 11, 12 sind seitlich weiter außenliegend auf der Achse 23 angeordnet als das Zahnsegment 17. Die Achse 23 wird durch einen Bundbolzen 25 gebildet, der an einem Ende mit der Schiene 13 verschraubt ist und der am deren Ende einen Kopf 26 aufweist.

Der Bundbolzen 25 ist von einer aus Kunststoff gefertigten Lagerbuchse 27 umgeben, die sich zwischen dem Kopf 26 und der Schiene 13 erstreckt. Das Zahnsegment 17 ist mit einer Hülse 28 fest verbunden, wobei die Hülse 28 auf der Lagerbuchse 27 drehbar gelagert ist. Ein endseitiger Kragen 29 der Hülse 28 ist mit dem Zahnsegment 17 verschweißt. Die Hülse 28 verläuft unter Bildung eines Spaltes 30 zur angrenzenden Schiene 13. Der Stellhebel 12 ist unter Vermittlung einer Buchse 31 ebenfalls auf der Hülse 28 gelagert. Die Buchse 31 ist in eine Öffnung 32 des Stellhebels 12 eingesetzt und örtlich mit diesem verschweißt. Durch die Buchse 31 wird die Lagerfläche des Stellhebels 12 vergrößert.

Das aus Rund-oder Vierkantmaterial hergestellte Federelement 24 ist in Querrichtung gesehen, zwischen dem Zahnsegment 17 und dem Stellhebel 12 angeordnet und umgibt die Hülse 28. Ein seitlich abgestelltes Federende 33 ragt in eine korrespondierende Ausnehmung 34 des Zahnsegmentes 17 hinein, wogegen das in die andere Richtung abgestellte Federende 35 in einen Durchbruch 36 des Stellhebels 12 eingreift (Fig. 3). Das Federelement 24 ist spiralförmig ausgebildet, wobei die beiden Federenden 33, 35 unter einen Winkel von etwa 90° versetzt zueinander verlaufen (Fig. 4).

Ferner ist am Zahnsegment 17 örtlich ein Mitnehmer 37 angeformt, der mit seinem freien, zur Seite hin abgestellten Ende in eine Schlitzöffnung 38 des Stellhebels 12 eingreift. In Querrichtung gesehen, ist der Mitnehmer 37 durch die Schlitzöffnung 38 hindurchgeführt und überragt diese abschnittsweise.

Der Mitnehmer 37 ist entfernt von der Achse 23 am oberen, seitlich außenliegenden Ende 39 des Zahnsegments 17 angeordnet. Die Schlitzöffnung 38 weist über ihre Höhenerstreckung gesehen, eine etwa gleichbleibende Breite auf, wobei diese Breite etwas größer ist als die Breite des Mitnehmers 37. Ferner ist die Schlitzöffnung 38 radial zur Achse 23 angeordnet.

In Höhenrichtung gesehen, ist die Schlitzöffnung 37 durch eine obere Begrenzungskante 40 und eine untere Begrenzungskante 41 definiert, wobei die beiden Begrenzungskanten 40, 41 einen Winkel $\beta$ miteinander einschließen. Im Ausführungsbeispiel beträgt der Winkel $\beta$ etwa 10 bis 15°. Es besteht jedoch die Möglichkeit, je nach gewünschter Elastizität den Winkel $\beta$ auch kleiner oder größer auszubilden. Die obere Begrenzungskante 40 verläuft gemäß Fig. 3 auf einer Geraden 42, die die beiden Drehpunkte 16, 43 des Stellhebels 12 miteinander verbindet. Je nach Lage des Mitnehmers 37 kann sich die obere Begrenzungskante 40 auch oberhalb oder unterhalb der Geraden 42 erstrecken. Der Schnittpunkt 44 der beiden den Winkel $\beta$ bildenden Geraden 42, 45 fällt mit dem Drehpunkt 16 des Stellhebels 12 zusammen. Die Höhenerstreckung der Schlitzöffnung 38 ist wesentlich größer als die Höhe H des abgestellten Mitnehmers 37. Durch die Schlitzöffnung 38, den Mitnehmer 37 und das Federelement 24 wird eine Relativbewegung zwischen dem Stellhebel 12 und dem Zahnsegment 17 ermöglicht, so daß in der Endphase des Schließvorganges eine definierte Elastizität in der Kraftübertragung zwischen dem Zahnsegment 17 und dem Stellhebel 12 vorhanden ist.

Der Mitnehmer 37 liegt beim Einfahren der Luftleitvorrichtung 4 so lange an der oberen Begrenzungskante 40 der Schlitzöffnung 38 an, bis die Luftleitvorrichtung 4 auf aufbauseitige Anschläge 46 aufläuft. Danach entkoppelt sich der Mitnehmer 37 von der oberen Begrenzungskante 40 und bewegt sich unter Überwindung der Federspannung bis zur unteren Begrenzungskante 41. Beim Ausfahren der Luftleitvorrichtung 4 liegt der Mitnehmer 37 an der oberen Begrenzungskante 40 der Schlitzöffnung 38 an, so daß in dieser Bewegungsrichtung stets eine starre Kraftübertragung zwischen dem Zahnsegment 17 und dem Stellhebel 12 erfolgt.

Die am oberen bzw. unteren Rand der Öffnung 10 am Heckdeckel 8 angeordneten Anschläge 46 sind elastisch, jedoch nicht höheneinstellbar ausgebildet und weisen ein gewisses Übermaß auf, so daß die Luftleitvorrichtung 4 in ihrer Ruhestellung A gegenüber der angrenzenden Deckelkontur geringfügig nach außen versetzt ist. Zur Vermeidung von Klappergeräuschen liegt die Luftleitvorrichtung 4 unter Vorspannung an den Anschlägen 46 auf.

Das mit dem Stellhebel 12 zusammenwirkende Federende 35 nimmt im Anlieferungszustand eine Lage F ein. Im Einbauzustand, der einem Vorspannwinkel $\alpha$ von etwa 15° des Federelementes 24 entspricht, ist dem Federelement 24 die Position G zugeordnet.

Beim maximaler Belastung des Federelementes 24 wird das Federende 35 zusätzlich um einen Winkel β von etwa 10 bis 15° verschwenkt und das Federelement 24 nimmt die Lage J ein.

Gemäß Fig. 3 sind an der Schiene 13 zwei Endschalter 47, 48 angeordnet, wobei der mit dem Stellhebel 11 zusammenwirkende Endschalter 47 die Ausfahrbewegung der Luftleitvorrichtung 4 begrenzt, wogegen der andere Endschalter 48 durch das Zahnsegment 17 betätigt wird und die Einfahrbewegung der Luftleitvorrichtung 4 beendet.

Beide Endschalter 47, 48 sind einstellbar an der Schiene 13 befestigt und weisen je eine Schaltzunge auf, die durch den Stellhebel 11 bzw. das Zahnsegment 17 betätigt wird. Die Endschalter 47, 48 sind über nicht näher dargestellte Leitungen mit den Elektromotor 19 verbunden und steuern diesen an.

## Patentansprüche

1. Antriebseinrichtung zum Bewegen einer an einem Kraftfahrzeug vorgesehenen Luftleitvorrichtung (4) von einer eingefahrenen Ruhestellung in eine ausgefahrene Betriebsstellung und umgekehrt, wobei die Antriebseinrichtung ein auf einer Achse drehbar gelagertes Zahnsegment (17) aufweist, das mit einem Stellhebel der Luftleitvorrichtung in Wirkverbindung steht, dadurch gekennzeichnet, daß das Zahnsegment (17) und der Stellhebel (12) getrennt voneinander auf der Achse (23) gelagert und über ein dazwischenliegendes Federelement (24) in einer bestimmten Lage relativ zueinander gehalten sind und daß ferner ein Mitnehmer (37) des Zahnsegments (17) derart mit einer Schlitzöffnung (38) des Stellhebels zusammenwirkt, daß beim Ausfahren der Luftleitvorrichtung (4) in die Betriebsstellung (B) eine starre Kraftübertragung zwischen dem Zahnsegment (17) und dem Stellhebel (12) erfolgt, wogegen sich in der Endphase des Schließvorganges der Luftleitvorrichtung (4) der Mitnehmer (37) von einer oberen Begrenzungskante (40) der Schlitzöffnung (38) entkoppelt und unter Überwindung der Federspannung des Federelementes (24) zu einer unteren Begrenzungskante (41) der Schlitzöffnung (38) bewegt.

2. Antriebseinrichtung nach Anspruch 1, dadurch gekennzeichnet, daß das Zahnsegment (17) mit einer Hülse (28) fest verbunden ist, wobei die Hülse (28) unter Zwischenschaltung einer Lagerbuchse (27) drehbar auf der Achse (23) gelagert ist.

3. Antriebseinrichtung nach Anspruch 2, dadurch gekennzeichnet, daß ein endseitiger Kragen (29) der Hülse (28) mit dem Zahnsegment (17) verschweißt ist.

4. Antriebseinrichtung nach Anspruch 1, dadurch gekennzeichnet, daß der Stellhebel (12) auf der Hülse (28) gelagert ist.

5. Antriebseinrichtung nach Anspruch 1, dadurch gekennzeichnet, daß das Federelement (24) auf der Achse (23) zwischen dem Zahnsegment (17) und dem mit Abstand dazu verlaufenden Stellhebel (12) angeordnet ist, wobei ein seitlich abgestelltes Federende (33) in eine Ausnehmung (34) des Zahnsegments (17) und das andere Federende (35) in einen Durchbruch (36) des Stellhebels (12) eingreift.

6. Antriebseinrichtung nach Anspruch 1, dadurch gekennzeichnet, daß die am Stellhebel (12) vorgesehene Schlitzöffnung (38) radial zur Achse (23) angeordnet ist.

7. Antriebseinrichtung nach Anspruch 1, dadurch gekennzeichnet, daß die Schlitzöffnung (38) in Höhenrichtung gesehen durch die obere Begrenzungskante (40) und die untere Begrenzungskante (41) definiert ist, wobei die beiden Begrenzungskanten (40, 41) unter einem Winkel (β) zueinander verlaufen.

8. Antriebseinrichtung nach Anspruch 7, dadurch gekennzeichnet, daß ein Schnittpunkt 44 der beiden den Winkel (β) bildenden Geraden (42, 45) mit dem Drehpunkt (16) des Stellhebels (12) zusammenfällt.

9. Antriebseinrichtung nach Anspruch 1, dadurch gekennzeichnet, daß der Mitnehmer (37) am oberen, seitlich außenliegenden Ende (39) des Zahnsegmentes (17) angeformt ist.

10. Antriebseinrichtung nach Anspruch 1, dadurch gekennzeichnet, daß die Schlitzöffnung (38) eine etwas größere Breite aufweist als der Mitnehmer 37.

11. Antriebseinrichtung nach Anspruch 1, dadurch gekennzeichnet, daß die definierte Elastizität der Antriebseinrichtung (18) durch den Winkel (β) der Schlitzöffnung (38) und/oder durch die Auslegung des Federelementes (24) variierbar ist.

12. Antriebseinrichtung nach Anspruch 1, dadurch gekennzeichnet, daß die Luftleitvorrichtung (4) in ihrer Ruhestellung (A) unter Vorspannung auf aufbauseitigen Anschlägen (46) aufliegt, wobei die Anschläge (46) elastisch, jedoch nicht einstellbar ausgebildet sind.

## Revendications

1. Dispositif d'entraînement pour déplacer un dispositif de guidage d'air (4) prévu sur un véhicule automobile, depuis une position de repos jusque dans une position de fonctionnement déployée et inversement, le dispositif d'entraînement présentant un segment denté tournant sur un axe, qui est placé en liaison fonctionnelle avec un levier de réglage du dispositif de guidage d'air, caractérisé en ce que le segment denté 1 (7) et le levier de réglage (12) sont montés séparés l'un de l'autre sur l'axe (23) et sont maintenus en une position déterminée l'une par rapport à l'autre, par l'intermédiaire d'un élément à ressort (24), et en ce qu'en outre, un élément d'entraînement (37) du segment denté (17) coopère avec une ouverture en fente (38) du levier de réglage, de telle sorte que, lors du déploiement du dispositif de guidage d'air (4) en position de fonctionnement (B), il s'ensuive une transmission mécaniquement rigide des efforts, entre le segment denté (17) et le levier de réglage (12), l'élément d'entraînement (37) étant par contre désaccouplé d'un bord de délimitation supérieur (40) de l'ouverture en fente (38) dans la phase finale du processus de fermeture du dispositif de guidage d'air (4) et déplacé vers un bord de délimitation inférieur (41) de l'ouverture en fente (38), en ayant à surmonter la contrainte élastique de l'élément à ressort (24).

2. Dispositif d'entraînement selon la revendication 1, caractérisé en ce que le segment denté (17) est relié rigidment à une douille (28) montée tournante sur l'axe (23) par l'entremise d'un coussinet de palier (27).

3. Dispositif d'entraînement selon la revendication 2, caractérisé en ce qu'une collerette d'extrémité (29) de la douille (28) est soudée au segment denté (17).

4. Dispositif d'entraînement selon la revendication 1, caractérisé en ce que le levier de réglage (12) est monté sur la douille (28).

5. Dispositif d'entraînement selon la revendication 1, caractérisé en ce que l'élément à ressort (24) est disposé sur l'axe (23), entre le segment denté (17 – et le levier de réglage (2) s'étendant à distance de celui-ci, une extrémité de ressort (33) décalée latéralement s'engageant dans un évidement (34) du segment denté (17) et l'autre extrémité de ressort (35) s'engageant dans un passage (36) du levier de réglage (12).

6. Dispositif d'entraînement selon la revendication 1, caractérisé en ce que l'ouverture en fente (38) prévue sur le levier de réglage (12) est disposée radialement par rapport à l'axe (23).

7. Dispositif d'entraînement selon la revendication 1, caractérisé en ce que, vue dans le sens de la hauteur, l'ouverture en fente (38) est définie par le bord de délimitation supérieur (40) et par le bord de délimitation inférieur (41), les deux bords de délimitation (40, 41) s'étendant en faisant entre eux un angle (β).

8. Dispositif d'entraînement selon la revendication 7, caractérisé en ce qu'un point d'intersection (44) des deux droites (42, 45) formant l'angle (β) coïncide avec le centre de rotation (16) du levier de réglage (12).

9. Dispositif d'entraînement selon la revendication 1, caractérisé en ce que l'élément d'entraînement (37) est formé sur l'extrémité supérieure et placée latéralement à l'extérieur (39) du segment denté (17).

10. Dispositif d'entraînement selon la revendication 1, caractérisé en ce que l'ouverture en fente (38) présente une largeur un peu plus grande que l'élément d'entraînement (37).

11. Dispositif d'entraînement selon la revendication 1, caractérisé en ce que l'élasticité définie du dispositif d'entraînement (18) est susceptible de variation au moyen de l'angle (β) de l'ouverture en fente (38) et/ou au moyen de la détermination de l'élément à ressort (24).

12. Dispositif d'entraînement selon la revendication 1, caractérisé en ce que, dans sa position de repos (A), le dispositif de guidage d'air (4) appuie sous l'effet d'une précontrainte sur des butées (46) situées côté carrosserie, les butées (46) étant élastiques mais toutefois non réglables.

**Claims**

1. A drive device for moving a spoiler device (4) provided on a motor vehicle from a retracted rest position into an extended operating position, the drive device comprising a toothed segment (17) rotatably mounted on a shaft and operatively connected to an adjustment lever of the spoiler device, characterized in that the toothed segment (17) and the adjustment lever (12) are mounted on the shaft (23) separately from each other and are held in a defined position relative to each other by way of an interposed spring element (24), and, in addition, an entrainment means (37) of the toothed segment (17) cooperates with a slot opening (38) in the adjustment lever in such a way that when the spoiler device (4) is extended into the operating position (B) a rigid transmission of force takes place between the toothed segment (17) and the adjustment lever (12), whereas in the final phase of the closing procedure of the spoiler device (4) the entrainment means (37) is disconnected from an upper boundary edge (40) of the slot opening (38) and while overcoming the spring tension of the spring element (24) moves to a lower boundary edge (41) of the slot opening (38).

2. A drive device according to Claim 1, characterized in that the toothed segment (17) is rigidly connected to a sleeve (28), the sleeve (28) being rotatably mounted on the shaft (23) with the interposition of a bearing bush (27).

3. A drive device according to Claim 2, characterized in that an end collar (29) of the sleeve (28) is welded to the toothed segment (17).

4. A drive device according to Claim 1, characterized in that the adjustment lever (12) is mounted on the sleeve (28).

5. A drive device according to Claim 1, characterized in that the spring element (24) is arranged on the shaft (23) between the toothed segment (17) and the adjustment lever (12) extending at a distance therefrom, a laterally angled spring end (33) engaging in a recess (34) in the toothed segment (17) and the other spring end (35) engaging in an aperture (36) in the adjustment lever (12).

6. A drive device according to Claim 1, characterized in that the slot opening (38) provided on the adjustment lever (12) is arranged radially to the shaft (23).

7. A drive device according to Claim 1, characterized in that the slot opening (38) is defined, as viewed in the vertical direction, by the upper boundary edge (40) and the lower boundary edge (41), the two boundary edges (40, 41) extending at an angle (β) to each other.

8. A drive device according to Claim 7, characterized in that a point of intersection 44 of the two straight lines (42, 45) forming the angle (β) coincides with the fulcrum (16) of the adjustment lever (12).

9. A drive device according to Claim 1, characterized in that the entrainment means (37) is formed integrally on the upper, laterally exterior end (39) of the toothed segment (17).

10. A drive device according to Claim 1, characterized in that the slot opening (38) has a slightly greater width than the entrainment means (37).

11. A drive device according to Claim 1, characterized in that the defined resilience of the drive device (18) is variable by the angle (β) of the slot opening (38) and/or by the design of the spring element (24).

12. A drive device according to Claim 1, characterized in that the spoiler device (4) is pre-stressed in its rest position (A) against stops (46) on the bodywork, the stops (46) being made resilient, but not adjustable.

FIG.1

FIG.4

FIG.2

EP 0 298 205 B1

FIG.3

EP 0 298 205 B1

FIG.5

EP 0 298 205 B1